(19) **Europäisches Patentamt / European Patent Office / Office européen des brevets**

(11) **EP 3 204 755 B1**

(12) **FASCICULE DE BREVET EUROPEEN**

(45) Date de publication et mention
de la délivrance du brevet:
**07.06.2023 Bulletin 2023/23**

(21) Numéro de dépôt: **15783969.7**

(22) Date de dépôt: **29.09.2015**

(51) Classification Internationale des Brevets (IPC):
**G01N 21/45** (2006.01)  **G01N 21/47** (2006.01)
**G01B 9/02** (2022.01)  **G02B 21/00** (2006.01)
**G01N 15/14** (2006.01)  **B82Y 35/00** (2011.01)
**G01N 33/569** (2006.01)

(52) Classification Coopérative des Brevets (CPC):
**G01N 15/1463; G01N 15/1434; G01N 15/1459;
G01N 21/45; G02B 21/0056; G02B 21/14;
G02B 21/367;** G01N 21/4788; G01N 2015/0038;
G01N 2015/144; G01N 2015/1488

(86) Numéro de dépôt international:
**PCT/EP2015/072425**

(87) Numéro de publication internationale:
**WO 2016/055306 (14.04.2016 Gazette 2016/15)**

(54) **METHODE ET DISPOSITIF DE DETECTION OPTIQUE DE NANOPARTICULES DANS UN ECHANTILLON FLUIDE**

VERFAHREN UND VORRICHTUNG ZUR OPTISCHEN DETEKTION VON NANOPARTIKELN IN EINER FLÜSSIGKEITSPROBE

METHOD AND DEVICE FOR OPTICALLY DETECTING NANOPARTICLES IN A FLUID SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2014 FR 1459690**

(43) Date de publication de la demande:
**16.08.2017 Bulletin 2017/33**

(73) Titulaires:
• **Ecole Supérieure de Physique et de Chimie Industrielles de la Ville de Paris**
  **75005 Paris (FR)**
• **Centre National de la Recherche Scientifique (CNRS)**
  **75794 Paris Cedex 16 (FR)**
• **Sorbonne Université**
  **75006 Paris (FR)**
• **INSERM - Institut National de la Santé et de la Recherche Médicale**
  **75013 Paris (FR)**
• **École Normale Supérieure**
  **75005 Paris (FR)**

(72) Inventeurs:
• **BOCCARA, Albert Claude**
  **F-75006 Paris (FR)**
• **BOCCARA, Martine**
  **F-75010 Paris (FR)**

(74) Mandataire: **Osha Liang**
  **2, rue de la Paix**
  **75002 Paris (FR)**

(56) Documents cités:
**WO-A1-2012/035170**  **WO-A2-2007/100785**
**US-A1- 2007 030 492**  **US-A1- 2009 290 156**

• **Fabio Giavazzi ET AL: "Scattering information obtained by optical microscopy: Differential dynamic microscopy and beyond", Physical Review E, vol. 80, no. 3, 1 September 2009 (2009-09-01), XP055190125, ISSN: 1539-3755, DOI: 10.1103/PhysRevE.80.031403**

**(Cont. page suivante)**

- **HAGSÃ TER S M ET AL: "Investigations on LED illumination for micro-PIV including a novel front-lit configuration", EXPERIMENTS IN FLUIDS ; EXPERIMENTAL METHODS AND THEIR APPLICATIONS TO FLUID FLOW, SPRINGER, BERLIN, DE, vol. 44, no. 2, 11 October 2007 (2007-10-11), pages 211-219, XP019588408, ISSN: 1432-1114**
- **Roberto Cerbino ET AL: "Differential Dynamic Microscopy: Probing Wave Vector Dependent Dynamics with a Microscope", Physical Review Letters, vol. 100, no. 18, 1 May 2008 (2008-05-01), XP055190017, ISSN: 0031-9007, DOI: 10.1103/PhysRevLett.100.188102**

**Description**

**Domaine technique de l'invention**

La présente invention concerne une méthode et un dispositif de détection optique de nanoparticules dans un échantillon fluide, par exemple dans un échantillon liquide, ou dans l'air, typiquement des nanoparticules de 30 nm à 200 nm. La méthode s'applique plus particulièrement à la détection de virus libres présents en environnement aquatique, notamment pour le comptage et la caractérisation de virus dans l'eau de mer ou dans l'eau de rivière.

**Etat de l'art**

Les virus sont des nano-objets, dont les dimensions sont comprises typiquement entre 30 nm et 200 nm. Ils sont généralement spécifiques d'une cellule hôte donnée et donc caractéristiques d'une espèce, voire d'une variété ou souche de cette espèce. C'est seulement à partir de 1989, grâce aux travaux d'une équipe norvégienne (voir K. J. Børsheim et al. « Enumeration and biomass estimation of planktonic bacteria and viruses by transmission électron microscopy", Appl. Environ. Microbiol. (1990) 56: 352-356), que l'on a pris conscience de l'abondance des virus dans des milieux aquatiques variés. De fortes concentrations ont été mesurées dans les lacs, les rivières, les glaces ou les sédiments, des profondeurs océaniques jusque parfois dans les nuages, ce qui suggère qu'ils jouent un rôle important dans le fonctionnement de la biosphère. Grâce à divers mécanismes, tels la destruction d'une espèce dominante au profit d'espèces plus rares ou le transfert de gènes viraux vers l'hôte, les virus maintiennent la biodiversité des écosystèmes aquatiques et facilitent le brassage génétique. Il s'avère donc fondamental de caractériser les virus dans les différents écosystèmes aquatiques et d'estimer leur distribution afin de mieux comprendre les relations entre les virus et l'hôte.

En fonction des écosystèmes aquatiques, de la saison ou encore des profondeurs des prélèvements, les concentrations en virus libres évoluent généralement entre $10^6$ et $10^9$ particules par millilitre. De nombreuses méthodes sont connues pour la caractérisation et le comptage des virus en milieu aqueux.

On connait par exemple la microscopie électronique à transmission (ou TEM, abréviation de l'expression anglosaxonne « Transmission Electron Microscopy ») qui permet de dénombrer les virus et caractériser leur morphologie avec une très grande précision. Cependant, cette technique, destructive, requiert un équipement encombrant et coûteux.

Parmi les techniques optiques de caractérisation de virus en milieu aqueux, on connait la microscopie à épifluorescence qui permet, après coloration des acides nucléiques par des marqueurs fluorescents, d'effectuer le dénombrement des virus libres (voir par exemple Bettarel et al., « A comparison of Methods for Counting Viruses in Aquatic Systems », Appl Environ Microbiol, 66 :2283 - 2289 (2000)). Cette technique cependant requiert une étape de fixation des marqueurs, qui peut s'avérer être gênante pour les étapes ultérieures d'analyse moléculaire et biochimique.

Du fait que les virus se comportent comme des particules nanométriques diélectriques dont l'indice de réfraction, proche de 1,5 dans le spectre visible, diffère sensiblement de celui de l'eau (1,33), il est également connu de détecter leur présence et potentiellement de les caractériser en déterminant la perturbation que ces nanoparticules induisent sur un champ électromagnétique incident.

Ainsi, des méthodes basées sur la diffusion de la lumière par des suspensions de particules virales ont été décrites (voir par exemple WM Balch et al., « Light scattering by Viral Suspensions », Limnol Oceanogr, 45 :492 - 498 (2000)). Cependant, ces méthodes sont limitées à des analyses de solutions homogènes de virus du fait de la faible sensibilité de la détection et ne permettent de déterminer que la concentration en virus pour une taille et une forme déterminées ; elles ne sont donc pas adaptées à l'identification de virus diversifiés, ce qui est généralement le cas en milieu naturel.

Pour gagner en sensibilité, des méthodes interférométriques ont été mises en oeuvre pour la détection de virus dans un environnement liquide. Ainsi, dans l'article de Mitra et al. (« Real-time Optical Détection of Single Human and Bacterial Viruses Based on Dark-field Interferometry », Biosens Bioelectron. 2012 January 15; 31(1): 499 - 504), est décrite une méthode de détection interférométrique pour l'observation de nanoparticules se déplaçant une par une dans un conduit nano fluidique. La faible intensité lumineuse diffusée par une nanoparticule éclairée au moyen d'un faisceau laser incident est amplifiée par un faisceau de référence de forte intensité. De plus, une illumination structurée permet de s'affranchir du bruit résultant des réflexions parasites sur les interfaces du conduit (détection sur fond noir). technique nécessite cependant outre l'utilisation d'une source cohérente (laser) un montage nano fluidique complexe.

Les documents Fabio Giavazzi et al: "Scattering information obtained by optical microscopy: Differential dynamic microscopy and beyond", Physical Review E, vol. 80, no. 3, 1 septembre 2009 (2009-09-01) et Roberto Cerbino et al: "Differential Dynamic Microscopy: Probing Wave Vector Dépendent Dynamics with a Microscope", Physical Review Letters, vol. 100, no. 18, 1 mai 2008 (2008-05-01) décrivent des systèmes de microscopie en champ clair basée sur une technique d'imagerie par diffusion en éclairage cohérent appelée microscopie différentielle dynamique. Le document Hagsa Ter S M et al: "Investigations on LED illumination for micro-PIV including a novel front-lit configuration", experiments in fluids; expérimental methods and their applications to fluid flow, Springer, Berlin, DE, vol. 44, no. 2, 11 octobre 2007 (2007-10-11), pages 211-219 décrit une technique visant à obtenir des informations sur les champs de flux dans des systèmes micro fluidiques. Aucun de ces documents cependant ne permet de déterminer la taille de chaque nanoparticule d'un volume d'analyse, à des fins par exemple d'identification des nanoparticules.

La présente invention présente une technique interférométrique pour la détection de nanoparticules en mouvement dans un fluide, par exemple en milieu aqueux, qui fonctionne en éclairage spatialement incohérent ce qui permet de s'affranchit de l'utilisation d'un laser. Par ailleurs, la technique décrite ne nécessite pas de montage spécifique pour le fluide examiné. La technique décrite dans la présente description présente cependant une très bonne sensibilité, et permet de détecter des nanoparticules de diamètres aussi petits que quelques dizaines de nanomètres.

RESUME

Selon un premier aspect, la présente description concerne un dispositif pour la détection optique en transmission de nanoparticules en mouvement dans un échantillon fluide comprenant:

- une source lumineuse configurée pour l'émission d'un faisceau d'éclairage de l'échantillon spatialement incohérent ;

- un système optique imageur comprenant un objectif de microscope;

- un détecteur optique bidimensionnel comprenant un plan de détection conjugué d'un plan focal objet de l'objectif de microscope par ledit système optique imageur, et permettant l'acquisition d'une séquence d'images d'un volume d'analyse de l'échantillon, chaque image résultant des interférences optiques entre le faisceau d'éclairage incident sur l'échantillon et les faisceaux diffusés par chacune des nanoparticules présentes dans le volume d'analyse pendant une durée prédéterminée inférieure à une milliseconde;

- des moyens de traitement d'images configurés pour réaliser une moyenne sur une séquence desdites images et de retrancher à chaque image la dite moyenne afin de déterminer, pour chaque nanoparticule du volume d'analyse, l'amplitude du faisceau diffusé par ladite nanoparticule et, à partir de ladite amplitude du faisceau diffusé, la taille de la nanoparticule.

Le dispositif de détection s'applique à la détection de nanoparticules, c'est-à-dire de particules de diamètre inférieur à quelques centaines de nanomètres, et plus particulièrement à des nanoparticules dont les diamètres sont compris entre 30 nm et 200 nm.

Le dispositif ainsi décrit, très simple à mettre en oeuvre et ne nécessitant pas de mise en forme particulière de l'échantillon, permet la détection de nanoparticules de diamètres aussi petits que quelques dizaines de nanomètres, du fait de l'amplification du signal de diffusion obtenue par interférence entre le signal émis par la source et le signal diffusé par chacune des nanoparticules pendant des temps très courts pendant lesquels les nanoparticules sont « figées ».

Les interférences formées directement entre le faisceau d'éclairage incident et les faisceaux diffusées par chacune des nanoparticules ne nécessitent pas de séparation physique initiale entre une onde de référence et une onde d'éclairage de l'échantillon pour la formation des interférences comme les montages interférométriques faisant appel à une séparatrice.

L'éclairage au moyen d'un faisceau spatialement incohérent permet de limiter la cohérence spatiale au niveau d'un « voxel » dont la section est inversement proportionnelle à l'ouverture numérique de l'objectif de microscope. Des interférences ne sont donc possibles qu'au sein d'un voxel à l'intérieur duquel se trouve une nanoparticule; les interférences ont lieu ainsi entre des ondes sphériques quasi concentriques.

Selon un ou plusieurs exemples de réalisation, la source lumineuse est impulsionnelle, permettant l'émission séquentielle de flashs lumineux de ladite durée prédéterminée ; le dispositif comprend en outre des moyens de synchronisation du détecteur optique bidimensionnel et de la source lumineuse impulsionnelle pour l'acquisition de ladite séquence d'images. Le détecteur bidimensionnel utilisé peut être alors une caméra standard fonctionnant à une centaine de Hz.

Alternativement, on pourra travailler avec une source continue et une caméra rapide, présentant typiquement une fréquence supérieure à quelques milliers d'images par seconde.

La source lumineuse est une source lumineuse spatialement incohérente, par exemple une LED, et permet d'éviter tout effet de speckle qui pourrait générer un bruit parasite au niveau de la détection.

Selon un ou plusieurs exemples de réalisation, l'objectif de microscope utilisé présente une ouverture numérique supérieure ou égale à 1 afin d'augmenter l'intensité du signal lumineux diffusé par chacune des nanoparticules et permettre la détection de nanoparticules de plus petit diamètre.

Selon un deuxième aspect, l'invention concerne une méthode pour la détection en transmission de nanoparticules en mouvement dans un échantillon fluide comprenant:

- l'émission d'un faisceau d'éclairage spatialement incohérent pour l'éclairage de l'échantillon;

- la formation, sur un plan de détection d'un détecteur optique bidimensionnel, et au moyen d'un système optique imageur comprenant un objectif de microscope, d'images d'un volume d'analyse de l'échantillon situé au voisinage d'un plan focal objet de l'objectif de microscope;

- l'acquisition, au moyen du détecteur bidimensionnel, d'une séquence d'images du volume d'analyse de l'échantillon, chaque image résultant des interférences optiques entre le faisceau d'éclairage incident sur l'échantillon et le faisceau diffusé par chacune des nanoparticules présentes dans le volume d'analyse pendant une durée prédéterminée inférieure à une milliseconde;

- le traitement des images pour réaliser une moyenne sur une séquence desdites images et retrancher à chaque image la dite moyenne afin de déterminer, pour chaque nanoparticule du volume d'analyse, l'amplitude du faisceau diffusé par ladite nanoparticule et, à partir de ladite amplitude du faisceau diffusé, la taille de la nanoparticule.

Selon un ou plusieurs exemples de réalisation, l'émission du faisceau lumineux est une émission séquentielle de flashs lumineux de ladite durée prédéterminée, l'acquisition des images étant synchronisée avec l'émission des flashs lumineux.
Selon un ou plusieurs exemples de réalisation, la méthode comprend en outre à partir de la séquence d'images ainsi traitées la détermination des trajectoires des nanoparticules.

BREVE DESCRIPTION DES DESSINS

D'autres avantages et caractéristiques de l'invention apparaîtront à la lecture de la description, illustrée par les figures suivantes :

- Figure 1, un schéma illustrant un exemple de dispositif de détection de nanoparticules dans un échantillon fluide, selon la présente description ;

- Figure 2, un schéma montrant plus en détails un exemple de support d'échantillon liquide dans un dispositif du type de la figure 1 ;

- Figure 3, un schéma illustrant les ondes sphériques issues de nanoparticules situées avant et après le plan focal objet de l'objectif de microscope, dans un exemple de dispositif du type de celui de la figure 1 ;

- Figures 4A et 4B, des schémas illustrant le principe d'interférence entre l'onde transmise et l'onde diffusée par une nanoparticule, respectivement dans le cas d'une particule située après le plan focal objet de l'objectif de microscope et avant le plan focal objet de l'objectif de microscope;

- Figure 5A, un schéma illustrant le principe d'interférence entre l'onde transmise et l'onde diffusée par chacune de plusieurs nanoparticules situées avant ou après le plan focal objet de l'objectif de microscope et Figure 5B, la figure d'interférence résultant dans le plan de détection du détecteur;

- Figures 6A à 6C, des figures montrant respectivement une image obtenue pour un échantillon liquide après traitement par retrait de la moyenne, un zoom sur une figure d'interférence de ladite image associée à une particule correspondant à un virus de type « phage λ» et le profil de l'intensité lumineuse mesurée au niveau de ladite particule en fonction du nombre de pixels dans le plan de détection du détecteur.

- Figure 7, une courbe illustrant les trajectoires de différentes nanoparticules (virus de type Phage T4), les trajectoires étant repérées par des suites de sauts effectués entre deux images consécutives.

Par soucis de cohérence, les éléments identiques sont repérés par les mêmes références dans les différentes figures.

DESCRIPTION DETAILLEE

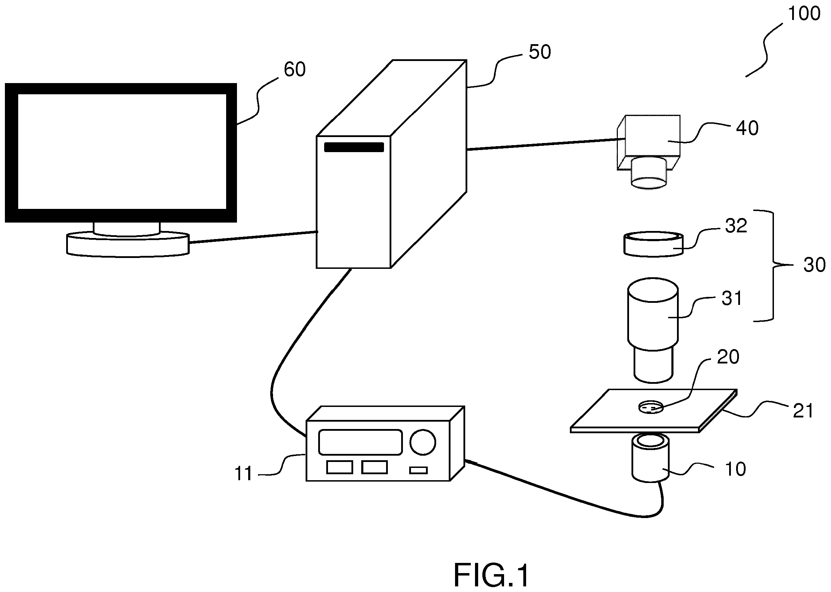

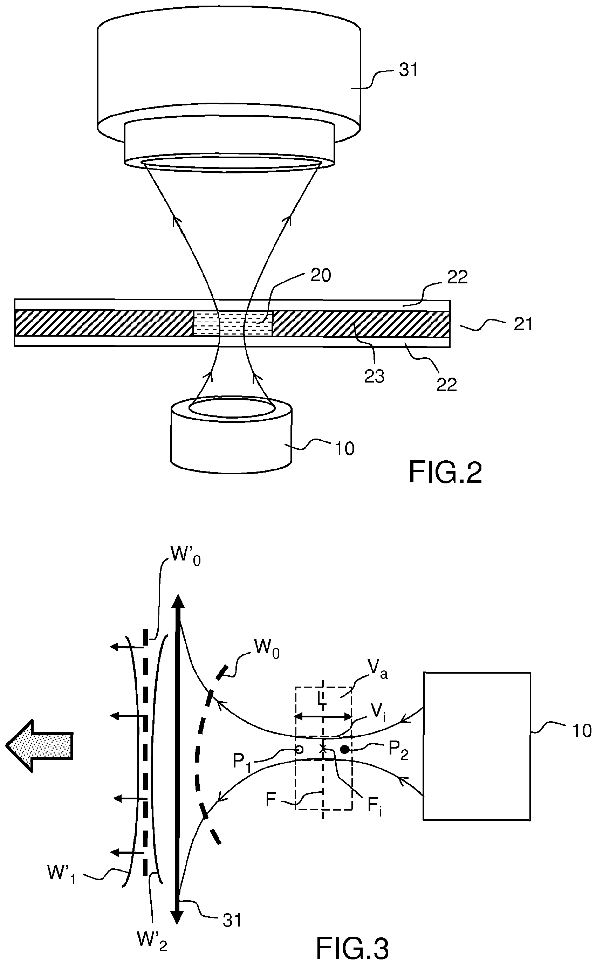

La figure 1 représente de façon schématique un exemple de dispositif de détection de nanoparticules en mouvement dans un échantillon fluide, selon la présente description et la figure 2 présente un exemple particulier d'agencement de l'échantillon dans un dispositif du type de la figure 1.

Le dispositif de détection 100 représenté sur la figure 1 comprend une source lumineuse 10 adaptée pour l'émission d'un faisceau incident à travers un échantillon liquide ou gazeux 20. La source est une source spatialement incohérente, par exemple une source thermique ou une LED (abréviation de l'expression anglo-saxonne « Light Emitting-Diode »). La source lumineuse 10 éclaire le champ d'un objectif de microscope 31 de grande ouverture numérique, typiquement supérieure à 1. Le dispositif 100 représenté sur la figure 1 comprend en outre une optique 32 , couramment appelée lentille de tube, qui, avec l'objectif de microscope 31, forme un système optique imageur 30 adapté pour former une image du plan focal objet de l'objectif de microscope sur un plan de détection d'un détecteur optique bidimensionnel 40. L'objectif est par exemple un objectif standard à immersion dans l'huile et le détecteur bidimensionnel est par exemple une caméra de type CCD ou CMOS fonctionnant typiquement avec une cadence minimale de l'ordre de la centaine de Hz et une grande capacité de puits, par exemple de l'ordre de cent mille électrons au minimum, la capacité de puits fixant le rapport signal sur bruit et donc la plus petite taille de virus mesurable. Dans l'exemple de la figure 1, le dispositif de détection 100 comprend en outre des moyens de traitement 50 reliés au détecteur 40 et à un écran 60, ainsi que dans cet exemple à une unité 11 de contrôle de la source lumineuse 10 pour assurer la synchronisation entre la source lorsqu'elle fonctionne en régime impulsionnel et la détection.

Comme cela est montré plus en détails sur la figure 2, l'échantillon 20 est par exemple un échantillon liquide dont le volume est de l'ordre du micro litre ; le volume est formé par un trou circulaire (avec un rayon de l'ordre du millimètre par exemple), dans un film plastique 23 d'épaisseur environ égale à une centaine de micromètres, placé entre 2 lamelles couvre-objet de microscope 22, le tout formant un porte-échantillon 21. Aucune préparation particulière n'est nécessaire pour l'analyse de l'échantillon liquide, si ce n'est parfois un filtrage préalable pour séparer les trop grandes particules et ne garder par exemple que les particules de diamètre inférieur à quelques centaines de nanomètres, avantageusement inférieur à une centaine de nanomètres; il se peut cependant que dans le cas d'échantillons particulièrement « propres » (faible concentration en virus), on soit amené à « concentrer » l'échantillon en virus au moyen de méthodes connues.

Bien que décrite dans le cas d'un échantillon liquide, la méthode de détection de nanoparticules selon la présente description pourrait tout aussi bien s'appliquer à des nanoparticules en mouvement dans un gaz, par exemple dans l'air ; dans ce cas, le dispositif 100 peut être directement installé dans l'environnement dont on cherche à analyser l'air. Eventuellement, un filtrage préalable peut également être opéré pour limiter la détection à des particules de diamètre inférieur à quelques centaines de nanomètres.

Le principe de l'invention est illustré au moyen de la figure 3 pour un volume correspondant à un « pixel » du champ objet ou « voxel » ; la figure 3 représente de façon schématique les ondes sphériques issues de deux nanoparticules situées respectivement dans le champ objet, avant et après le plan focal objet de l'objectif de microscope.

On appelle pixel du champ objet ou « voxel », un volume élémentaire $V_i$ défini dans l'espace objet de l'objectif de microscope 31 pour un pixel du champ image, le champ image étant défini par la surface de détection effective du détecteur 40.

Un voxel $V_i$ dans le champ objet peut s'assimiler à un volume cylindrique de longueur L définie par la profondeur de champ de l'objectif de microscope 31 et de section S définie par la tâche de diffraction de l'objectif de microscope. La profondeur de champ L et le diamètre $\phi$ de la section S sont donnés par:

$$L = 1,22 \frac{\lambda n}{NA^2} \qquad (1)$$

$$\Phi = 1,22 \frac{\lambda}{NA} \qquad (2)$$

Où NA est l'ouverture numérique de l'objectif de microscope, n l'indice du milieu dans lequel baigne l'espace objet (par exemple un milieu d'indice n « 1,5 dans le cas d'un objectif à immersion dans l'huile) et $\lambda$ la longueur d'onde de travail de l'onde lumineuse émise par la source 10.

On peut définir ainsi un volume d'analyse $V_a$ de l'échantillon par l'ensemble des voxels $V_i$; le volume d'analyse $V_a$ représente le volume à l'intérieur duquel des particules en mouvement dans le fluide pourront être détectées. Le volume d'analyse présente une dimension latérale définie par la dimension du champ objet, c'est à dire la dimension de la surface de détection multipliée par l'inverse du grandissement du système d'imagerie 30, et une dimension axiale

6

définie par la profondeur de champ L.

Comme montré sur la figure 3, l'onde issue d'un point $F_i$ du plan focal F de l'objectif de microscope 31 est une onde sphérique $W_0$ de centre $F_i$ que l'objectif de microscope transforme en onde plane $W'_0$. L'onde plane $W'_0$ appelée par la suite « onde de référence », rencontre la lentille de tube de microscope (non représentée sur la figure 3). Dans le plan de détection du détecteur 40, cette onde plane forme une tâche de diffraction dont le diamètre est fonction de l'ouverture numérique de l'objectif de microscope et du grandissement du système d'imagerie 30.

A l'intérieur du voxel $V_i$, des nanoparticules $P_1$ et $P_2$ sub longueur d'onde, c'est-à-dire de dimension inférieure à la longueur d'onde de travail, situées au voisinage du point $F_i$ mais aux limites de la profondeur de champ, émettent chacune lorsqu'elles sont éclairées par l'onde lumineuse issue de la source 10, une onde sphérique diffusée que l'objectif de microscope 31 transforme en une onde quasi-plane respectivement notée $W'_1$, $W'_2$ sur la figure 3. Les nanoparticules sont trop petites pour introduire un déphasage. Par contre, la cohérence spatiale au sein d'un voxel génère en présence d'une nanoparticule des interférences entre des ondes sphériques quasi concentriques issues respectivement du faisceau d'éclairage et du faisceau diffusé par la nanoparticule.

La méthode de détection selon la présente description est basée sur l'acquisition, au moyen du détecteur bidimensionnel 40, d'une séquence d'images du volume d'analyse de l'échantillon, chaque image résultant des interférences optiques entre le faisceau incident émis pendant une durée prédéterminée suffisamment courte par rapport au temps de déplacement d'une nanoparticule, typiquement inférieure à une milliseconde, et le faisceau diffusé par chacune des nanoparticules présentes dans le volume d'analyse formé à partir du faisceau incident. Ainsi, dans l'exemple de la figure 3, chacune des ondes $W'_1$, $W'_2$ interfère avec l'onde de référence $W'_0$. On peut montrer (voir ci-dessous) que selon que la nanoparticule se trouve en aval du plan focal objet de l'objectif de microscope (par exemple la particule $P_1$) ou en amont (par exemple la particule $P_2$), l'interférence sera constructive ou destructive. Cette différence est due à la « phase de Gouy » qui est à l'origine du déphasage de 180° entre une onde sphérique issue d'un point situé avant le ou après le foyer.

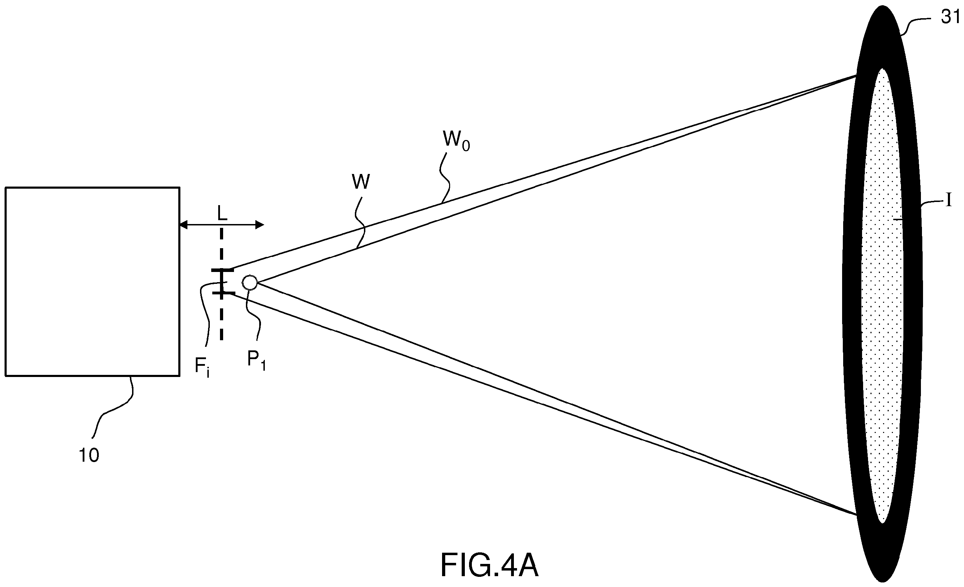

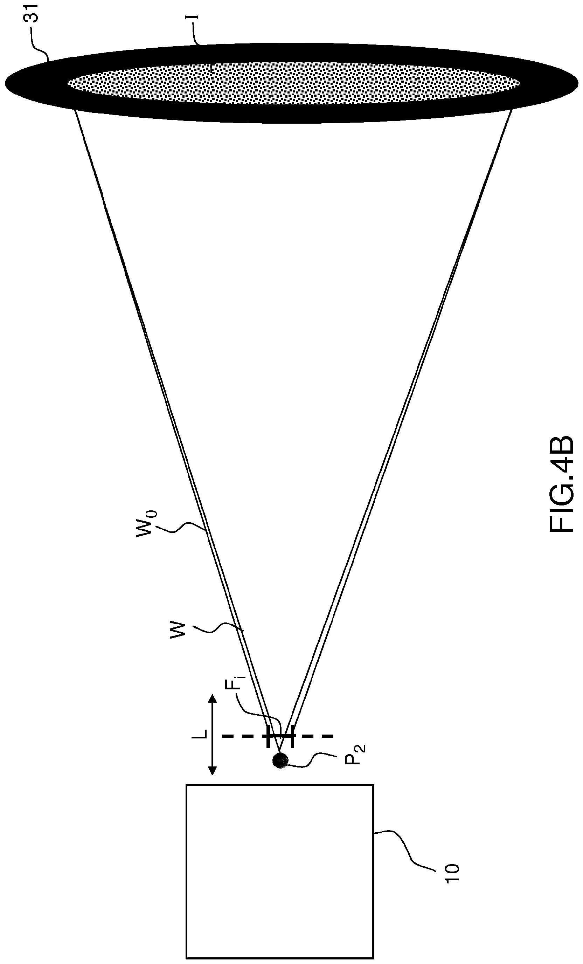

Les figures 4A et 4B illustrent ainsi le mécanisme d'interférence constructive, respectivement destructive, pour des nanoparticules positionnées en aval, respectivement en amont, du plan focal objet de l'objectif de microscope, mais toujours dans la profondeur de champ. Sur ces figures, seules sont représentés la source 10 et l'objectif de microscope 31.

L'exemple de la figure 4A illustre le cas d'une nanoparticule $P_1$ située en aval du plan focal objet de l'objectif de microscope 31. La nanoparticule $P_1$ est située dans le volume d'analyse défini par le champ du détecteur (non représenté sur la figure 4A) et la profondeur de champ L de l'objectif de microscope 31. La nanoparticule est éclairée par la source 10, avantageusement une source incohérente spatialement et temporellement, par exemple une LED, afin d'éviter la formation de speckle qui pourrait gêner l'interprétation des signaux d'interférence.

On appelle ici $W_0$ l'onde de référence issu du point focal $F_i$ et interceptée par l'ouverture de l'objectif de microscope et W l'onde diffusée par la nanoparticule $P_1$, également interceptée par l'ouverture de l'objectif de microscope. Dans le cas de la figure 4A, l'onde de référence et l'onde diffusée sont des ondes sphériques en phase. Il se produit des interférences constructives entre les ondes qui se traduisent au niveau de l'ouverture de l'objectif de microscope par une figure d'interférence I claire. Le décalage entre la position de la nanoparticule et le foyer étant inférieur à la profondeur de champ, les ondes W et $W_0$ sont en phase pour tous les angles des rayons diffusés dans l'ouverture de l'objectif de microscope, c'est-à-dire tous les angles formés entre l'axe optique de l'objectif de microscope et l'ouverture maximale de l'objectif, soit typiquement 54° pour un objectif à immersion dans l'huile. De ce fait, on ne voit pas d'anneaux sur le champ d'interférence de la figure 4A.

L'exemple de la figure 4B illustre au contraire le cas d'une nanoparticule $P_2$ située en aval du plan focal objet de l'objectif de microscope 31, mais toujours dans le volume d'analyse dont la largeur est définie par la profondeur de champ de l'objectif de microscope 31. Dans cet exemple, l'onde de référence $W_0$ et l'onde diffusée W sont en opposition de phase du fait de l'introduction de la phase de Gouy. Il se produit des interférences destructives entre les ondes qui se traduisent au niveau de l'ouverture de l'objectif de microscope par une figure d'interférence I sombre. Comme précédemment, le décalage entre la position de la nanoparticule et le foyer étant inférieur à la profondeur de champ, les ondes W et $W_0$ sont en opposition de phase pour tous les angles et on ne voit pas d'anneaux.

Dans un phénomène d'interférence entre un très faible signal, comme celui diffusé par chacune des nanoparticules et le fort signal issu de la source, ainsi que c'est décrit au moyen des figures 4A et 4B, on observe une amplification par interférence qui permet la détection de très petits signaux de diffusion et de ce fait l'identification de nanoparticules de diamètres inférieures à quelques dizaines de nanomètres.

Ainsi, si on appelle $N_S$ le nombre de photoélectrons induits directement par les photons de la source et $N_D$ ceux produits par la nanoparticule diffusante on obtient par interférence entre ces deux ondes un nombre de photo électrons N tel que :

$$N = N_S + N_D + 2\sqrt{N_S N_D}\cos(\Phi) \qquad (3)$$

Où est $\Phi$ est le déphasage entre le faisceau source et le faisceau diffusé.

Ici, le nombre $N_D$ de photoélectrons produits par la nanoparticule diffusante est très petit devant le nombre $N_S$ de photoélectrons émis par la source (rapport $1/10^6$ typiquement). Par ailleurs, dans notre cas, du fait de la position des particules dans la profondeur de champ de l'objectif de microscope, le déphasage $\Phi$ est voisin de zéro ou de 180° selon la position relative de la particule diffusante et du foyer ; de ce fait cos ($\Phi$) vaut alors + 1 ou -1.

Ainsi, si l'on pratique une moyenne sur un grand nombre d'images, compte tenu du mouvement des particules, en général un mouvement brownien du fait de la très petite taille des particules, la moyenne effectuée sur l'ensemble des images représente bien le fond ($N_S$)car les signaux associés aux particules sont réduits au niveau du bruit. Pour obtenir des images ne contenant plus que les signaux associés aux nanoparticules, on peut alors retrancher de chaque image acquise la moyenne. On obtient alors le terme d'interférence $2\sqrt{N_S N_D}$ , qui constitue le signal après retrait du fond et qui est très supérieur à $N_D$. A partir de la mesure du terme d'interférence, on peut obtenir l'amplitude du faisceau diffusé par la nanoparticule $\sqrt{N_D}$ , $N_S$ étant connu, et en déduire des informations comme par exemple la taille de la particule, l'amplitude du signal diffusé variant comme le cube de la taille de la particule.

Un calcul du rapport signal-sur bruit avec un détecteur capable de stocker 160 000 électrons par pixel montre, qu'après traitement par soustraction de la moyenne, le bruit de mesure résiduel correspond au signal qui serait crée par des particules de 20 nanomètres de diamètre.

Par ailleurs, l'utilisation d'un objectif de microscope de grande ouverture numérique NA, typiquement NA supérieure ou égale à 1, permettra non seulement d'augmenter l'angle solide de collection de lumière mais également d'augmenter l'intensité du signal diffusé par chaque nanoparticule et de ce fait de diminuer le diamètre minimum de nanoparticules observables. En effet, l'intensité diffusée par une nanoparticule varie en $\sigma/S$ où $\sigma$ est la section efficace de diffusion de la nanoparticule et S est la surface de la tâche de diffraction ; ainsi, suivant l'équation (2) supra, l'intensité diffusée par une nanoparticule varie avec le carré de l'ouverture numérique NA.

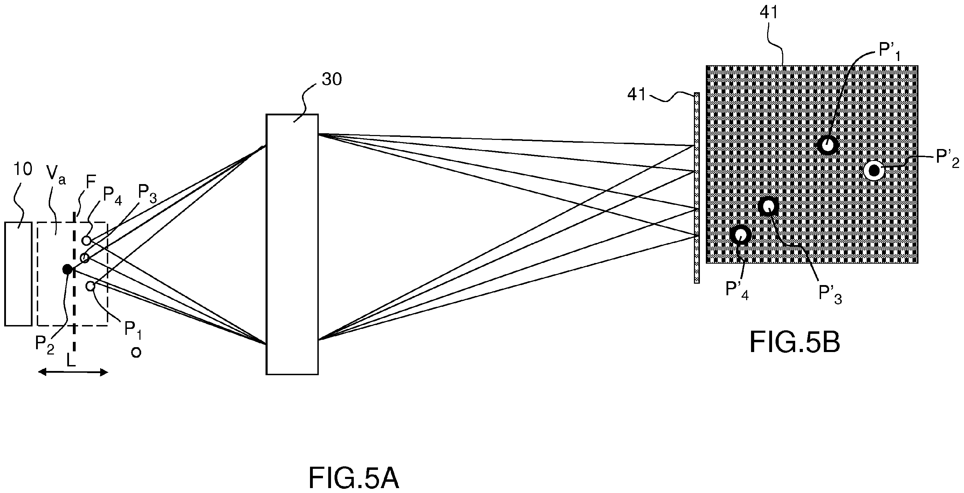

La figure 5B représente schématiquement une image obtenue à un instant donné pour l'observation d'une pluralité de nanoparticules en mouvement dans un milieu fluide, tel que représenté sur la figure 5A.

Sur la figure 5A sont représentées 4 nanoparticules référencées $P_1$ à $P_4$, les nanoparticules $P_1$, $P_3$, $P_4$ se situant en aval du plan focal de l'objectif de microscope et la particule $P_2$ se situant en amont du plan focal de l'objectif de microscope. Toutes les particules se trouvent dans le volume d'analyse $V_a$ défini par le champ du détecteur et la profondeur de champ L de l'objectif de microscope.

Les nanoparticules sont en mouvement dans le milieu fluide. Il peut s'agir par exemple de nanoparticules de quelques dizaines de nanomètres à quelques centaines de nanomètres, par exemple des virus en milieu aqueux. Lors de la mise en oeuvre de la méthode de détection selon la présente description, il est procédé à une série d'acquisition d'images, chaque image résultant des interférences optiques entre le faisceau incident émis et les faisceaux diffusés par chacune des nanoparticules pendant une durée déterminée suffisamment courte pour « figer » le mouvement des particules dans le volume d'analyse.

De façon connue, la diffusivité d'une nanoparticule sphérique de rayon r animée par le mouvement Brownien est donnée par la formule :

$$D = k_B T / 6\pi\eta r \qquad (4)$$

où $k_B$ est la constante de Boltzmann et $\eta$ la viscosité du fluide dans lequel est immergée la nanoparticule à la température T.

Pour un intervalle de temps t, le saut $l$ de la particule telle qu'elle est imagée en 2 dimensions sur la caméra est donné par : $l = \sqrt{4Dt}$ où D est la diffusivité donnée par l'équation (4).

On cherche donc en pratique à former des images pendant des temps t suffisamment courts pour que la nanoparticule n'ait pas pu parcourir une distance supérieure à une fraction de la tache de diffraction. Typiquement, on montre que les images doivent être formées pendant des durées n'excédant pas la milliseconde.

Selon une première variante, le mouvement peut être figé par la détection, en utilisant une caméra présentant une très forte cadence d'acquisition, typiquement supérieure à quelques milliers d'images par seconde.

Alternativement, on peut utiliser une source impulsionnelle de durée inférieure à la milliseconde synchronisée avec l'acquisition de chacune des images sur le détecteur. Dans ce cas, le détecteur peut être une caméra avec une cadence d'acquisition standard, par exemple d'une centaine de Hz. Le « saut » effectué par une nanoparticule de quelques dizaines de nanomètres de rayon, par exemple d'environ 40 nm, et mesuré entre 2 images consécutives est supérieur à 1 micromètre ce qui est facilement mesurable compte tenu de la résolution des objectifs de microscope utilisés.

Comme expliqué précédemment au moyen des figures 4A et 4B, les nanoparticules situées en aval du plan focal de l'objectif de microscope vont donner lieu à des interférences constructives résultant en des tâches de diffraction claires (P'$_1$, P'$_3$, P'$_4$) sur le plan de détection 41 représenté sur la figure 5B. Au contraire, les nanoparticules situées en amont du plan focal de l'objectif de microscope vont donner lieu à des interférences destructives résultant en des tâches de diffraction sombres sur le plan de détection (P'$_2$).

En pratique, comme expliqué précédemment, on observe sur le plan de détection 41 un fond important sur lequel se superposent des tâches de diffraction plus claires ou plus foncées que le fond, selon que les interférences sont constructives ou destructives. Avantageusement, selon la méthode de détection selon la présente description, il est procédé à l'enregistrement d'une séquence d'images, par exemple quelques centaines, dont il est fait la moyenne. Pour obtenir les images ne contenant plus que les signaux associés aux nanoparticules, on peut alors retrancher de chaque image acquise la moyenne.

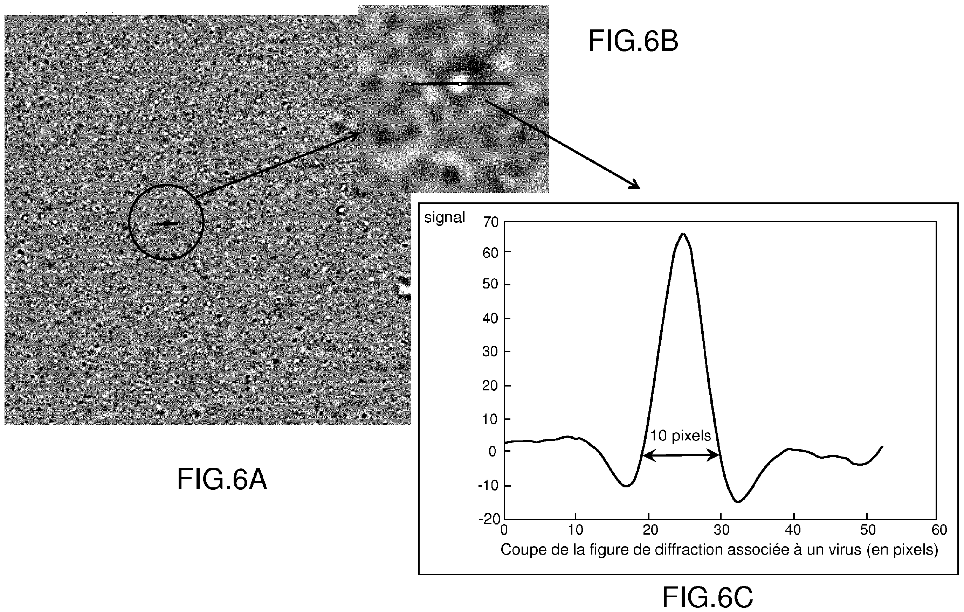

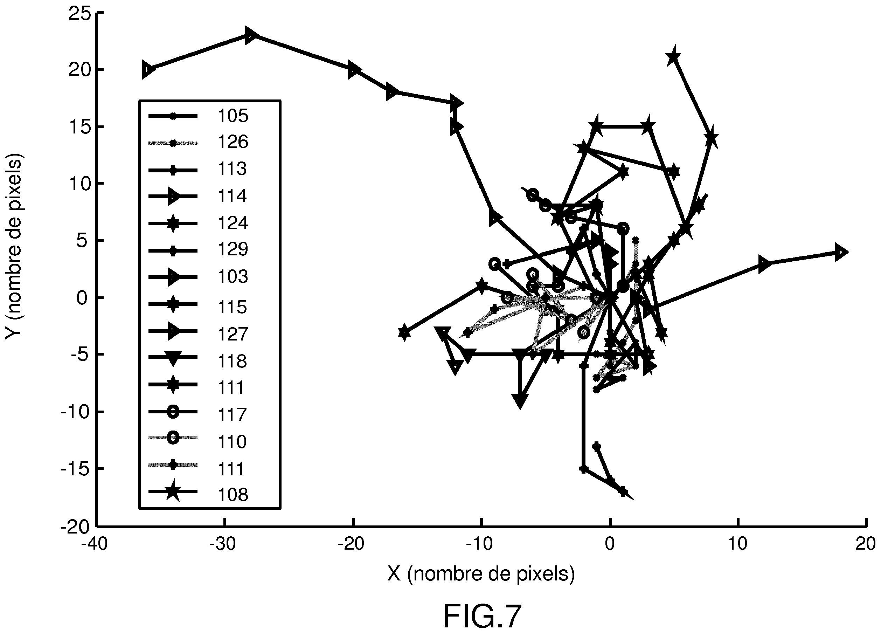

Les figures 6 et 7 montrent des premiers résultats expérimentaux obtenus avec des échantillons liquides analysés en utilisant la méthode de détection selon la présente description pour détecter et identifier des virus potentiellement présents. Il s'agit ici respectivement d'un échantillon comprenant des virus de type phage λ et d'un échantillon comprenant des virus de type phage T4, échantillon très représentatif de ce que l'on trouve sur les côtes de Bretagne.

La figure 6A est une image obtenue d'un échantillon liquide après traitement par retrait de la moyenne. Le dispositif utilisé pour l'obtention de cette image est un dispositif du type de celui de la figure 1 avec une LED bleu Impérial Thorlabs®, un objectif à immersion dans l'huile Olympus® 100X, une lentille de tube de 300 mm de focale pour suréchantillonner la tache de diffraction et une caméra CMOS Photon Locus® PHF-MV-D1024E-160-CL-12. On observe sur la figure 6A un ensemble de taches claires ou sombres correspondant chacune à une nanoparticule située en amont ou en aval di plan focal objet de l'objectif de microscope.

La figure 6B montre un zoom sur une figure d'interférence de l'image de la figure 6A associé à une nanoparticule isolée et la figure 6C illustre le profil de l'intensité lumineuse (en unités calibrées à l'aide de nanoparticules de taille connue) mesurée au niveau de ladite particule en fonction du nombre de pixels dans le plan de détection du détecteur et correspondant à l'amplitude du faisceau diffusé par la nanoparticule.

Il est possible à partir des images obtenues non seulement de confirmer la présence de virus mais en plus de les identifier, notamment en fonction de leur taille ; en l'espèce, la mesure de l'intensité lumineuse diffusée permet de conclure à une nanoparticule de diamètre 60 nm, correspondant au virus « phage λ».

La figure 7 illustre les trajectoires d'un certain nombre de particules mesurées pendant une période de l'ordre du dixième de seconde, avec un dispositif similaire à celui utilisé pour la formation des images montrées en figure 6A. Chaque trajectoire est formée dans cet exemple d'une suite de sauts effectués entre 2 images successives par une quinzaine de nanoparticules, identifiées chacune sur la figure 7 par un symbole montré dans la légende.

A partir de ces mesures expérimentales, il est possible comme précédemment, de déterminer l'intensité lumineuse diffusée (valeur notée en unités arbitraires, dans la légende, en vis-à-vis de chaque symbole). Ici, l'intensité diffusée est sensiblement identique pour toutes les nanoparticules et on peut conclure à la présence d'une population homogène de virus de type « phage T4 » de diamètre 90 nanomètres.

L'analyse des trajectoires permet d'apporter une information complémentaire aux valeurs mesurées de l'intensité diffusée. En effet, l'analyse du mouvement brownien permet également de déduire des informations spécifiques aux nanoparticules, comme par exemple leurs dimensions, la présence d'une queue qui perturbe le mouvement Brownien, etc.

Bien que décrite à travers un certain nombre d'exemples de réalisation, la méthode optique de détection de nanoparticules en environnement fluide selon l'invention et le dispositif pour la mise en oeuvre de ladite méthode comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Revendications**

1. Dispositif (100) pour la détection optique en transmission de nanoparticules en mouvement dans un échantillon fluide comprenant :

   - une source lumineuse (10) configurée pour l'émission d'un faisceau d'éclairage de l'échantillon spatialement incohérent;
   - un système optique imageur (30) comprenant un objectif de microscope (31);
   - un détecteur optique bidimensionnel (40) comprenant un plan de détection (41) conjugué d'un plan focal objet de l'objectif de microscope par ledit système optique imageur (30), et permettant l'acquisition d'une séquence d'images d'un volume d'analyse de l'échantillon, chaque image résultant des interférences optiques entre le faisceau d'éclairage incident sur l'échantillon et les faisceaux diffusés par chacune des nanoparticules présentes dans le volume d'analyse pendant une durée prédéterminée inférieure à une milliseconde;
- des moyens de traitement d'images (50) configurés pour réaliser une moyenne sur une séquence desdites images et de retrancher à chaque image la dite moyenne afin de déterminer, pour chaque nanoparticule du volume d'analyse, l'amplitude du faisceau diffusé par ladite nanoparticule et, à partir de ladite amplitude du faisceau diffusé, la taille de la nanoparticule.

2. Dispositif selon la revendication 1, dans lequel la source lumineuse est impulsionnelle, permettant l'émission séquentielle de flashs lumineux de ladite durée prédéterminée, et le dispositif comprend en outre des moyens de synchronisation du détecteur optique bidimensionnel et de la source lumineuse impulsionnelle pour l'acquisition de ladite séquence d'images.

3. Dispositif selon l'une quelconque des revendications précédentes, dans lequel l'objectif de microscope présente une ouverture numérique supérieure ou égale à 1.

4. Méthode pour la détection optique en transmission de nanoparticules en mouvement dans un échantillon fluide (20) comprenant:

- l'émission d'un faisceau d'éclairage spatialement incohérent pour l'éclairage de l'échantillon (20);
- la formation, sur un plan de détection (41) d'un détecteur optique bidimensionnel (40), et au moyen d'un système optique imageur (30) comprenant un objectif de microscope (31), d'images d'un volume d'analyse de l'échantillon situé au voisinage d'un plan focal objet de l'objectif de microscope;
- l'acquisition, au moyen du détecteur bidimensionnel, d'une séquence d'images du volume d'analyse de l'échantillon, chaque image résultant des interférences optiques entre le faisceau d'éclairage et le faisceau diffusé par chacune des nanoparticules présentes dans le volume d'analyse pendant une durée prédéterminée inférieure à une milliseconde;
- le traitement des images pour réaliser une moyenne sur une séquence desdites images et retrancher à chaque image la dite moyenne afin de déterminer, pour chaque nanoparticule du volume d'analyse, l'amplitude du faisceau diffusé par ladite nanoparticule et, à partir de ladite amplitude du faisceau diffusé, la taille de la nanoparticule.

5. Méthode selon la revendication 4, dans laquelle l'émission du faisceau lumineux est une émission séquentielle de flashs lumineux de ladite durée prédéterminée, l'acquisition des images étant synchronisée avec l'émission des flashs lumineux.

6. Méthode selon l'une quelconque des revendications 4 à 5, comprenant en outre à partir de la séquence d'images ainsi traitées la détermination des trajectoires des nanoparticules.

**Patentansprüche**

1. Vorrichtung (100) zur optischen Detektion in Transmission von sich bewegenden Nanopartikeln in einer flüssigen Probe, aufweisend:

- Eine Lichtquelle (10), die so ausgebildet ist, dass sie einen räumlich inkohärenten Belichtungsstrahl auf die Probe aussendet;
- ein abbildendes optisches System (30), das ein Mikroskopobjektiv (31) aufweist;
- einen zweidimensionalen optischen Detektor (40), der eine Detektionsebene (41) aufweist, die zu einer Objektbrennebene des Mikroskopobjektivs durch das abbildende optische System (30) konjugiert ist, und der die Erfassung einer Bildsequenz eines Analysevolumens der Probe ermöglicht, wobei jedes Bild aus den optischen Interferenzen zwischen dem auf die Probe einfallenden Belichtungsstrahl und den von jedem der in dem Analysevolumen vorhandenen Nanopartikel während einer vorbestimmten Dauer von weniger als einer Millisekunde gestreuten Strahlen resultiert;
- Bildverarbeitungsmittel (50), die so ausgebildet sind, dass sie eine Sequenz der Bilder mitteln und von jedem Bild den Mittelwert abziehen, um für jedes Nanopartikel im Analysevolumen die Amplitude des von dem Nanopartikel gestreuten Strahls und, ausgehend von der Amplitude des gestreuten Strahls, die Größe des Nanopartikels zu bestimmen.

2. Vorrichtung nach Anspruch 1, wobei die Lichtquelle eine Impulslichtquelle ist, die die sequentielle Emission von Lichtblitzen der genannten vorbestimmten Dauer ermöglicht, und die Vorrichtung ferner Mittel zur Synchronisation des zweidimensionalen optischen Detektors und der Impulslichtquelle aufweist, um die genannte Bildsequenz zu erfassen.

3. Vorrichtung nach einem der vorhergehenden Ansprüche, wobei das Mikroskopobjektiv eine numerische Apertur von größer oder gleich 1 aufweist.

4. Verfahren zur optischen Detektion in Transmission von sich bewegenden Nanopartikeln in einer fluiden Probe (20), aufweisend:

- Aussenden eines räumlich inkohärenten Belichtungsstrahls zur Belichtung der Probe (20);
- Erzeugen von Bildern auf einer Detektionsebene (41) eines zweidimensionalen optischen Detektors (40) und mittels eines abbildenden optischen Systems (30), das ein Mikroskopobjektiv (31) aufweist, von einem Analysevolumen der Probe, das in der Nähe einer Objektbrennebene des Mikroskopobjektivs liegt;
- Erfassen, mittels des zweidimensionalen Detektors, einer Sequenz von Bildern des Analysevolumens der Probe, wobei jedes Bild aus den optischen Interferenzen zwischen dem Belichtungsstrahl und dem Strahl resultiert, der von jedem der Nanopartikel, die in dem Analysevolumen vorhanden sind, während einer vorbestimmten Zeitdauer von weniger als einer Millisekunde gestreut wird;
- die Verarbeitung der Bilder, um einen Mittelwert über eine Sequenz der Bilder zu bilden und von jedem Bild den Mittelwert abzuziehen, um für jedes Nanopartikel im Analysevolumen die Amplitude des von dem Nanopartikel gestreuten Strahls und, ausgehend von der Amplitude des gestreuten Strahls, die Größe des Nanopartikels zu bestimmen.

5. Verfahren nach Anspruch 4, bei dem die Emission des Lichtstrahls eine sequenzielle Emission von Lichtblitzen der genannten vorbestimmten Dauer ist, wobei die Bilderfassung mit der Emission der Lichtblitze synchronisiert ist.

6. Verfahren nach einem der Ansprüche 4 bis 5, ferner aufweisend die Bestimmung der Flugbahnen der Nanopartikel anhand der so verarbeiteten Bildsequenz.

**Claims**

1. A device (100) for optically detecting in transmission nanoparticles moving in a fluid sample, comprising:

- a light source (10) configured for emitting a spatially incoherent beam for illuminating the sample;
- an imaging optical system (30) comprising a microscope objective (31);
- a two-dimensional optical detector (40) comprising a detection plane (41) conjugated with an object focal plane of the microscope objective by said imaging optical system (30), and allowing a sequence of images of an analysis volume of the sample to be acquired, each image resulting from optical interferences between the illuminating beam incident on the sample and the beams scattered by each of the nanoparticles present in the analysis volume during a preset duration shorter than one millisecond;
- image processing means (50) configured for generating an average of a sequence of said images and for subtracting said average from each image in order to determine, for each nanoparticle of the analysis volume, the amplitude of the scattered beam and, from said amplitude of the scattered beam, the size of the nanoparticle

2. The device according to claim 1, wherein the light source is a pulsed source, enabling the sequential emitting of light pulses of said preset duration, and the device furthermore comprises means of synchronization of the two-dimensional optical detector and the pulsed light source for the acquisition of said sequence of images

3. The device according to one of the preceding claims, wherein the microscope objective used has a numerical aperture greater than or equal to 1

4. A method for optically detecting in transmission nanoparticles moving in a fluid sample (20), comprising:

- emitting a spatially incoherent light beam for illuminating the sample (20);
- forming, on the detection plane (41) of a two-dimensional optical detector (40), and by means of an imaging optical system (30) comprising a microscope objective (31), images of an analysis volume of the sample located in the vicinity of an object focal plane of the microscope objective;

- acquiring, by means of the two-dimensional detector, a sequence of images of the analysis volume of the sample, each image resulting from optical interferences between the illuminating beam and the beam scattered by each of the nanoparticles present in the analysis volume during a preset duration shorter than one millisecond;
- processing the images to generate an average of a sequence of said images and subtract said average from each image in order to determine, for each nanoparticle of the analysis volume, the amplitude of the scattered beam and, from said amplitude of the scattered beam, the size of the nanoparticle

5. The method according to claim 4, wherein emitting the light beam comprises sequentially emitting light pulses of said preset duration, wherein the acquisition of the images is synchronized with the emission of the light pulses.

6. The method according to one of claims 4 to 5, furthermore comprising determining the trajectories of the nanoparticles starting from the sequence of processed images

FIG.1

FIG.2

FIG.3

FIG.4A

FIG.4B

FIG.5A

FIG.5B

EP 3 204 755 B1

FIG.6A

FIG.6B

FIG.6C

Coupe de la figure de diffraction associée à un virus (en pixels)

EP 3 204 755 B1

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **VOIR K. J. BØRSHEIM et al.** Enumeration and biomass estimation of planktonic bacteria and viruses by transmission électron microscopy. *Appl. Environ. Microbiol.,* 1990, vol. 56, 352-356
- **BETTAREL et al.** A comparison of Methods for Counting Viruses in Aquatic Systems. *Appl Environ Microbiol,* 2000, vol. 66, 2283-2289
- **WM BALCH et al.** Light scattering by Viral Suspensions. *Limnol Oceanogr,* 2000, vol. 45, 492-498
- **MITRA et al.** Real-time Optical Détection of Single Human and Bacterial Viruses Based on Dark-field Interferometry. *Biosens Bioelectron.,* 15 Janvier 2012, vol. 31 (1), 499-504
- **FABIO GIAVAZZI et al.** Scattering information obtained by optical microscopy: Differential dynamic microscopy and beyond. *Physical Review E,* 01 Septembre 2009, vol. 80 (3
- **ROBERTO CERBINO et al.** Differential Dynamic Microscopy: Probing Wave Vector Dépendent Dynamics with a Microscope. *Physical Review Letters,* 01 Mai 2008, vol. 100 (18
- expérimental methods and their applications to fluid flow. **HAGSA TER S M et al.** Investigations on LED illumination for micro-PIV including a novel front-lit configuration'', experiments in fluids. Springer, 11 Octobre 2007, vol. 44, 211-219